# NEUE EUROPÄISCHE PATENTSCHRIFT

(11) **EP 1 430 230 B2**
(45) Veröffentlichungstag und Bekanntmachung des Hinweises auf die Entscheidung über den Einspruch: **13.01.2016**
(45) Hinweis auf die Patenterteilung: 27.01.2010
(21) Anmeldenummer: 02777244.1
(22) Anmeldetag: 27.09.2002
(51) Int. Cl.: F16D 21/06, F16D 13/75

(54) **MEHRFACHKUPPLUNGSANORDNUNG, INSBESONDERE DOPPELKUPPLUNGSANORDNUNG**
MULTIPLE CLUTCH SYSTEM, PARTICULARLY A DOUBLE CLUTCH SYSTEM
SYSTEME A PLUSIEURS EMBRAYAGES, EN PARTICULIER A DOUBLE EMBRAYAGE

(30) Priorität: 28.09.2001 DE 10148176; 30.07.2002 DE 10234548
(43) Veröffentlichungstag der Anmeldung: 23.06.2004
(73) Patentinhaber: ZF Friedrichshafen AG, 88046 Friedrichshafen (DE)
(72) Erfinder: VOGT, Sebastian, 97616 Bad Neustadt (DE); ORLAMÜNDER, Andreas, 97422 Schweinfurt (DE)
(86) Internationale Anmeldenummer: PCT/EP2002/010878
(87) Internationale Veröffentlichungsnummer: WO 2003/029677

(56) Entgegenhaltungen:
- EP-A2- 1 134 447
- DE-A- 19 703 333
- DE-A- 19 934 853
- DE-B- 1 292 962
- FR-A- 1 036 741
- US-A- 3 185 274

## Beschreibung

### Technisches Gebiet

Die vorliegende Erfindung betrifft eine Mehrfach-Kupplungsanordnung, insbesondere eine Doppelkupplungsanordnung, welche beispielsweise zur Drehmomentübertragung in einem Antriebsstrang eines Kraftfahrzeugs eingesetzt werden kann. So eine Anordnung geht z.B. aus DE-A-199 34 853 hervor.

### Stand der Technik

Insbesondere in Antriebssystemen, über welche sehr hohe Drehmomente übertragen werden müssen, also beispielsweise bei Lastkraftwagen eingesetzten Antriebssystemen, in zunehmendem Maße jedoch auch bei Einsatz in Personenkraftwagen, werden Getriebe eingesetzt, die zwei im Allgemeinen zueinander koaxial angeordnete Getriebeeingangswellen aufweisen. Die verschiedenen Gänge des Getriebes übertragen dann das Drehmoment zwischen verschiedenen dieser Eingangswellen und einer Ausgangswelle. Jede dieser Eingangswellen ist mit einer Kupplungsscheibe drehfest verbunden, und je nachdem, welche der Kupplungsscheiben in einer Kupplung dann reibmäßig beaufschlagt wird und somit bezüglich einer Antriebswelle, beispielsweise Kurbelwelle, drehfest gehalten ist, wird über die eine oder die andere Eingangswelle ein Drehmoment in das Getriebe eingeleitet. In diesen Kupplungen werden im Allgemeinen als Membranfedern ausgebildete Kraftspeicher eingesetzt, welche die Kupplungen in Richtung Einkuppelstellung vorspannen. Den verschiedenen Kupplungsbereichen einer derartigen Mehrfach-Kupplungsanordnung, also beispielsweise Doppelkupplungsanordnung, sind jeweilige Stellglieder, beispielsweise in Form von Geberzylinder- und Nehmerzylindersystemen, zugeordnet, um in Abstimmung aufeinander dafür zu sorgen, dass über einen der Kupplungsbereiche ein Drehmoment übertragen werden kann, während der andere Kupplungsbereich ausgerückt gehalten ist und nicht zur Drehmomentübertragung eingesetzt wird.

Derartige Systeme weisen zum einen das Problem auf, dass sie vor allem bei der Durchführung von Einrückvorgängen vergleichsweise ungenau dosierbar sind, so dass eine definierte Zunahme der Einrückkraft nur schwer erlangt werden kann. Des Weiteren besteht das Problem, dass bei Ausfall der zum Ausrücken eingesetzten Stellgliedanordnungen beide Kupplungsbereiche einer Doppelkupplung in einem eingerückten Zustand gehalten sind. Ist in einem derartigen Zustand beispielsweise durch starke Belastung oder ebenfalls durch einen Defekt das Auslegen eines Gangs im Getriebe nicht möglich, so würde ein derartiger Defekt dazu führen, dass ein mit einem derartigen System ausgestattetes Fahrzeug aufgrund einer im Antriebsstrang auftretenden Blockade nicht mehr abgeschleppt werden könnte. Dies könnte dann der Fall sein, wenn in dem Getriebe über eine der Getriebeeingangswellen momentan ein Drehmoment übertragen wird oder zu übertragen wäre, und bei der anderen Getriebeeingangswelle bereits eine Gangstufe aktiviert ist, um durch nachfolgendes Umschalten in der Doppelkupplung einen Gangwechsel vorzunehmen.

Die EP 0 185 176 A1 offenbart eine Mehrfach-Kupplungsanordnung gemäß dem Oberbegriff des Anspruchs 1.

### Aufgabe der Erfindung

Es ist die Aufgabe der vorliegenden Erfindung, eine Mehrfach-Kupplungsanordnung, insbesondere Doppelkupplungsanordnung, bereitzustellen, welche bei verbesserter Dosierbarkeit insbesondere bei Auftreten von Fehlfunktionen eine erhöhte Betriebssicherheit aufweist.

### Darstellung der Erfindung

Gemäß der vorliegenden Erfindung wird diese Aufgabe gelöst durch eine Mehrfach-Kupplungsanordnung, insbesondere Doppelkupplungsanordnung, gemäß Anspruch 1. Diese umfasst eine Gehäuseanordnung, welche mit einem Antriebsorgan zur gemeinsamen Drehung um eine Drehachse gekoppelt oder koppelbar ist, einen ersten Kupplungsbereich mit einer ersten Anpressplatte, durch welche ein Reibbereich einer ersten Kupplungsscheibe gegen einen mit der Gehäuseanordnung drehbaren Widerlagerbereich pressbar ist, sowie einer ersten Stellgliedanordnung, durch welche der erste Kupplungsbereich zur Durchführung von Stellvorgängen aktivierbar ist, einen zweiten Kupplungsbereich mit einer zweiten Anpressplatte, durch welche ein Reibbereich einer zweiten Kupplungsscheibe gegen einen mit der Gehäuseanordnungen drehbaren Widerlagerbereich pressbar ist, sowie einer zweiten Stellgliedanordnung, durch welche der zweite Kupplungsbereich zur Durchführung von Stellvorgängen aktivierbar ist, wobei die erste Stellgliedanordnung und die zweite Stellgliedanordnung zur Erzeugung einer den jeweils zugeordneten Kupplungsbereich in Richtung Einkuppeln beaufschlagenden Stellkraft ausgebildet ist.

Da gemäß der vorliegenden Erfindung also zumindest einer der Kupplungsbereiche, vorzugsweise jedoch beide Kupplungsbereiche, nicht durch einen Kraftspeicher in Richtung Einkuppeln vorgespannt sind, sondern durch entsprechende Ansteuerung einer diesem jeweils zugeordneten Stellgliedanordnung aktiv in den eingerückten Zustand gebracht werden muss, kann entsprechend der definierten Ansteuerung einer derartigen Stellgliedanordnung diese exakt eine für einen bestimmten Betriebszustand geforderte Einrückkraft liefern, ohne dabei durch einen seine Betriebscharakteristik beispielsweise altersabhängig ändernden Kraftspeicher beeinflusst zu sein. Des Weiteren wird gewährleistet, dass dann, wenn im Bereich der Stellgliedanordnungen ein Defekt auftritt, ein jeweiliger Kupplungsbereich nicht zwangsweise in einen eingerückten Zustand gebracht wird, sondern in einen Zustand gelangt, in welchem er im Wesentlichen kein Drehmoment mehr übertragen kann. Dies ist vor allem auch dann von Bedeutung, wenn ein derartiger Stellglieddefekt während des Fahrzustands auftritt. Es sei auch hier angenommen, dass beispielsweise die Antriebskraft bzw. das Antriebsdrehmoment über eine der Getriebeeingangswellen übertagen wird, während an der anderen bereits ein Gang für einen bevorstehenden oder erwarteten Gangwechsel eingelegt ist. Würde in diesem Zustand ein Stellglieddefekt auftreten, der dazu führt, dass zwangsweise beide Kupplungsbereiche einer Doppelkupplung in einen drehmomentübertragenden Zustand gelangen, so hätte dies im System Kupplung-Getriebe einen vollständigen Kraftrückschluss und eine Selbstblockade zur Folge. Dies würde im Allgemeinen zu erhelblichen Beschädigungen im Bereich des Getriebes führen. Da bei der vorliegenden Erfindung jedoch dafür gesorgt ist, dass eine Einrückkraft und somit ein Drehmomentübertragungszustand nur durch definierte Ansteuerung einer jeweiligen Stellgliedanordnung erfolgen kann, also auch nur bei korrekt funktionierender Stellgliedanordnung erfolgen kann, ist diese Gefahr des zwangsweisen Einrückens mehrerer Kupplungsbereiche gleichzeitig ausgeschlossen.

Bei der erfindungsgemäßen Mehrfach-Kupplungsanordnung ist vorgesehen, dass der erste Kupplungsbereich und der zweite Kupplungsbereich eine Übertragungshebelanordnung aufweist, welche durch die erste Stellgliedanordnung bzw. die zweite Stellgliedanordnung beaufschlagbar ist und bezüglich der Gehäuseanordnung einerseits und der jeweils zugeordneten Anpressplatte andererseits abgestützt ist.

Um den zur Verfügung stehenden Bauraum möglichst effizient ausnutzen zu können, wird vorgeschlagen, dass eine der Übertragungshebelanordnungen an einer Innenseite der Gehäuseanordnung abgestützt ist und die andere der Übertragungshebelanordnungen an einer Außenseite der Gehäuseanordnung abgestützt ist.

Dabei kann vorzugsweise weiter vorgesehen sein, dass die Übertragungshebelanordnung des anderen Kupplungsbereiches an der Außenseite der Gehäuseanordnung abgestützt ist.

Gemäß einem weiteren vorteilhaften Aspekt der vorliegenden Erfindung ist, vorgesehen, dass bei einem der Kupplungsbereiche die zugehörige Übertragungshebelanordnung bezüglich der Gehäuseanordnung in einem Bereich radial außerhalb der Abstützung bezüglich der Anpressplatte abgestützt ist und bei dem anderen der Kupplungsbereiche die zugehörige Übertragungshebelanordnung bezüglich der Gehäuseanordnung in einen Bereich radial innerhalb der Abstützung bezüglich der Anpressplatte abgestützt ist. Auf diese Art und Weise wird bei den verschiedenen Übertragungshebelanordnungen eine zueinander unterschiedliche Kraftübertragungsrichtung, was die Betätigungskraftrichtung betrifft, erlangt. Als Folge davon wird es möglich, durch die jeweilige Stellgliedanordnung beide Übertragungshebelanordnungen in gleicher Richtung zu beaufschlagen, um das Einkuppeln des jeweils zugeordneten Kupplungsbereichs zu erlangen. Dies vereinfacht den Aufbau eines kompakten Stellgliedsystems.

Ferner ist bei der erfindungsgemäßen Mehrfach-Kupplungsanordnung vorgesehen, dass bei dem anderen der Kupplungsbereiche wenigstens ein Übertragungsglied vorgesehen ist, über welches die Übertragungshebelanordnung bezüglich der Anpressplatte abgestützt ist.

Ein sehr kompakter Aufbau der erfindungsgemäßen Mehrfach-Kupplungsanordnung wird dadurch erhalten, dass die Gehäuseanordnung ein zur Ankopplung an das Antriebsorgan vorgesehenen Gehäuseteil sowie einen zur Abstützung wenigstens einer der Übertragungshebelanordnungen vorgesehenes zweites Gehäuseteil aufweist. Dabei wird der Aufbau weiter dadurch vereinfacht, dass die den Widerlagerbereich des ersten Kupplungsbereichs und den Widerlagerbereich des zweiten Kupplungsbereichs bereitstellende zwichen platte mit dem ersten und dem zweiten Gehäuseteil verbunden ist.

Selbst dann, wenn, wie vorangehend ausgeführt, durch besonders vorteilhafte Maßnahmen bei der erfindungsgemäßen Mehrfach-Kupplungsanordnung dafür gesorgt ist, dass beide Stellgliedanordnungen die gleiche Wirkrichtung haben, ist, insbesondere in Verbindung mit der durch die Übertragungshebelanordnungen vorgesehenen Kraftumlenkung gemäß einem weiteren vorteilhaften Aspekt der Erfindung vorzugsweise vorgesehen, dass die erste Anpressplatte und die zweite Anpressplatte durch die jeweils zugeordnete Stellgliedanordnung in entgegengesetzten axialen Richtungen beaufschlagbar sind. Auch diese Merkmalsgruppe trägt zu einem sehr kompakt ausgebildeten Aufbau bei.

Bei derartigen Reibungskupplungen besteht im Allgemeinen das Problem, dass im Bereich der Kupplungsscheiben Reibbeläge vorgesehen sind, deren Dicke über die Betriebslebensdauer hinweg abnimmt. Eine Abnahme dieser Dicke hat zur Folge, dass die verschiedenen Anpressplatten näher auf die jeweils zugeordneten Widerlagerbereiche zu bewegt werden und dementsprechend auch beispielsweise Übertragungshebelsysteme ihre Einbaulage ändern. Um dafür zu sorgen, dass nicht verschleißbedingte Veränderungen in der Ansteuer- bzw. Ausrückcharakteristik der verschiedenen Kupplungsbereiche auftreten, wird vorgeschlagen, dass wenigstens eine der Stellgliedanordnungen auf den zugeordneten Kupplungsbereich, vorzugsweise die Anpressplatte dieses Kupplungsbereichs, über eine Verschleißnachstellvorrichtung einwirkt.

Dabei kann eine sehr einfach zu realisierende, gleichwohl jedoch sehr präzise arbeitende Verschleißnachstellvorrichtung umfassen:
- wenigstens ein bei Durchführung eines Verschleißnachstellvorgangs bezüglich der Anpressplatte verlagerbares Nachstellelement,
- ein bezüglich der Gehäuseanordnung feststehendes erstes Erfassungselement,
- ein an der Anpressplatte gehaltenes und bei Auftreten von Verschleiß durch Zusammenwirkung mit dem ersten Erfassungselement bezüglich der Anpressplatte auslenkbares zweites Erfassungselement,
- ein Arretierelement, durch welches das zweite Erfassungselement bezüglich der Anpressplatte in seiner verschleißbedingten Auslenklage arretierbar ist,
wobei das Arretierelement bei Auftreten von Verschleiß und dabei erzeugter Auslenkung des zweiten Erfassungselements bezüglich der Anpressplatte und bezüglich des zweiten Erfassungselements verlagerbar ist und wobei durch das zweite Erfassungselement oder/und das Arretierelement eine Nachstellbewegung des wenigstens einen Nachstellelements begrenzbar ist.

Das zweite Erfassungselement kann blattfederartig ausgebildet sein und in einem seiner Endbereiche an der Anpressplatte festgelegt sein.

Ferner kann vorgesehen sein, dass bei Auftreten von Verschleiß das zweite Erfassungselement wenigstens mit einem Längenbereich in Richtung von der Anpressplatte weg bewegt wird, dass das Arretierelement keilartig ausgebildet ist und dass durch Vorspannung das keilartig ausgebildete Arretierelement in einen zwischen der Anpressplatte und dem Längenbereich des zweiten Erfassungselements gebildeten Zwischenraum vorgespannt ist.

Eine über den gesamten Umfangsbereich hinweg gleichmäßige Nachstellcharakteristik kann in einfacher Weise dadurch erlangt werden, dass das wenigstens eine Nachstellelement einen bei Durchführung einer Verschleißnachstellung bezüglich der Anpressplatte um die Drehachse drehbaren Nachstellring umfasst.

Bei einer alternativen Ausgestaltungsform kann vorgesehen sein, dass wenigstens einer der Übertragungshebelanordnungen bezüglich der Gehäuseanordnung über eine Verschleißnachstellvorrichtung abgestützt ist.

Die vorliegende Erfindung wird nachfolgend mit Bezug auf die beiliegenden Zeichnungen anhand bevorzugter Ausgestaltungsformen detailliert beschrieben. Es zeigt:
- Fig. 1: eine Längsschnittansicht, welche prinzipiell den Aufbau einer erfindungsgemäßen Doppelkupplungsanordnung zeigt;
- Fig. 2: eine prinzipielle Ansicht einer Verschleißnachstellvorrichtung in einem Zustand vor Auftreten von Verschleiß, betrachtet von radial außen;
- Fig. 3: die in Fig. 2 dargestellte Verschleißnachstellvorrichtung in einem Zustand nach Auftreten von Verschleiß, jedoch vor Durchführung einer Verschleißkompensation; und
- Fig. 4: die in den Fig. 2 und 3 dargestellte Verschleißnachstellvorrichtung nach Durchführung einer Verschleißkompensation;
- Fig. 5: eine Teil-Längsschnittansicht einer nicht erfindungsgemäß ausgestalteten Doppelkupplung.

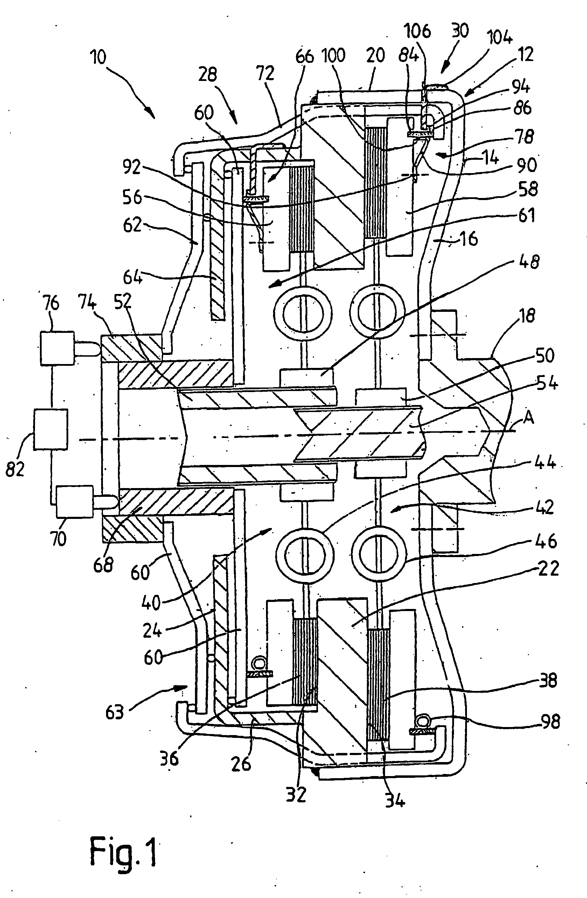

In Fig. 1 ist eine erfindungsgemäße Doppelkupplung allgemein mit 10 bezeichnet. Die Doppelkupplung 10 umfasst eine Gehäuseanordnung 12. Diese Gehäuseanordnung 12 wiederum umfasst ein im Wesentlichen topfartig ausgebildetes erstes Gehäuseteil 14, das in seinem Bodenbereich 16 radial innen an eine Antriebswelle 18, beispielsweise eine Kurbelwelle einer Brennkraftmaschine, drehfest angebunden ist oder angebunden werden kann. In seinem sich näherungsweise axial erstreckenden Randbereich 20 ist das erste Gehäuseteil 14 mit einer Zwischenplatte 22 in deren radial äußerem Bereich beispielsweise durch Verschweißung fest verbunden. Hier kann beispielsweise vorgesehen sein, dass der Randbereich 20 sich mit der Zwischenplatte 22 axial überlappt und in seinem axialen Endbereich durch eine Schweißnaht oder mehrere Schweißpunkte dann an der Zwischenplatte 20 festgelegt ist. Ferner ist mit der Zwischenplatte 22 ein zweites Gehäuseteil 24, das ebenfalls eine im Wesentlichen topfartige Struktur aufweist, fest verbunden. Der radial äußere, sich näherungsweise in Achsrichtung einer Drehachse A erstreckende Randbereich 26 kann beispielsweise an eine Stirnfläche der Zwischenplatte 22 stumpf angelegt bzw. angeschweißt sein. Wie im Folgenden noch dargelegt, ist diese Verbindung des zweiten Gehäuseteils 24 mit der Zwischenplatte 22 in einem Bereich radial innerhalb der Verbindung der Zwischenplatte 22 mit dem ersten Gehäuseteil 14, woraus folgt, dass das zweite Gehäuseteil 24 einen kleineren Durchmesser hat, als das erste Gehäuseteil 14.

Die Zwischenplatte 22 bildet für zwei Kupplungsbereiche 28, 30 der Doppelkupplung 10 einen Widerlagerbereich und stellt an ihren beiden axialen Seiten jeweilige Reibflächen 32, 34 zur Verfügung, an welchen die Reibbeläge 36, 38 zweier Kupplungsscheiben 40, 42 zur reibmäßigen Anlage gelangen können. Die Kupplungsscheiben 40, 42 können von herkömmlichem Aufbau sein und beispielsweise jeweilige Torsionsschwingungsdämpferanordnungen 44, 46 aufweisen. Die Nabenbereiche 48, 50 der Kupplungsscheiben 40, 42 sind über Keilverzahnungen oder dergleichen mit den zueinander und zur Drehachse A koaxial angeordneten Getriebeeingangswellen 52, 54 drehfest gekoppelt, bezüglich diesen jedoch axial bewegbar gehalten.

Beidseits der Zwischenplatte 22 weisen die beiden Kupplungsbereiche 28, 30 jeweils eine Anpressplatte 56, 58 auf. Die Anpressplatten 56, 58 sind mit der Gehäuseanordnung 12 beispielsweise nach Art herkömmlicher Reibungskupplungen über Tangentialblattfedern derart verbunden, dass zwischen den Anpressplatten 56 bzw. 58 und der Gehäuseanordnung 12 zwar eine im Wesentlichen drehfeste Kopplung besteht, dass die Anpressplatten 56, 58 jedoch zumindest in geringem Ausmaß axial bezüglich der Gehäuseanordnung 12 und somit auch bezüglich der Zwischenplatte 22 verlagerbar sind. Ferner kann bei Einsatz derartiger Tangentialblattfederanordnungen oder sonstiger elastischer Vorspannanordnungen vorgesehen sein, dass diese gleichzeitig auch für die Anpressplatten 56, 58 die erforderliche Lüftkraft erzeugen. Das heißt, die Anpressplatte 56 des ersten Kupplungsbereichs 28 ist in der Darstellung der Fig. 1 von der Zwischenplatte 22 weg, also nach links beaufschlagt, während die Anpressplatte 58 des Kupplungsbereichs 30 in der Darstellung der Fig. 1 von der Zwischenplatte weg, also nach rechts beaufschlagt ist.

Jedem der Kupplungsbereiche 28, 30 ist weiter eine Übertragungshebelanordnung 61, 63 mit jeweils wenigstens einem Übertragungshebel 60 bzw. 62 zugeordnet. Vorzugsweise sind in Umfangsrichtung verteilt mehrere derartige Übertragungshebel 60 bzw. 62 vorgesehen. Beide Übertragungshebelanordnungen 61, 63 bzw. deren Übertragungshebel 60 bzw. 62 stützen sich jeweils an einem Bodenbereich 64 des topfartig ausgebildeten zweiten Gehäuseteils 24 ab. Man erkennt, dass die Übertragungshebel 60 der dem ersten Kupplungsbereich 28 zugeordneten Übertragungshebelanordnung 61 in ihrem radial äußeren Bereich an dem Gehäuseteil 24 abgestützt sind und in einem radial weiter innen gelegenen Bereich über eine nachfolgend noch detaillierter beschriebene Verschleißnachstellvorrichtung 66 auf die Anpressplatte 56 des ersten Kupplungsbereichs 28 einwirken. In ihrem radial inneren Bereich werden diese Übertragungshebel 60 der Übertragungshebelanordnung 61 dann über ein Einrücklager 68 durch eine dem ersten Kupplungsbereich 28 zugeordnete Stellgliedanordnung 70 beaufschlagt. Bei Beaufschlagungsaktivierung dieser Stellgliedanordnung 70 wird also über das Einrücklager 68 auf die Übertragungshebel 60 eine diese radial innen auf die Antriebswelle 12 zu beaufschlagende Kraft ausgeübt. Aufgrund der Hebelverhältnisse drücken dabei die Hebel 60 über die Verschleißnachstellvorrichtung die Anpressplatte 56 in Richtung auf die Zwischenplatte 22 zu, so dass zur Erlangung des Einkuppelzustands die Reibbeläge 36 der Kupplungsscheibe 40 zwischen dieser Anpressplatte 56 und der Zwischenplatte 22 geklemmt werden.

Die Übertragungshebel 62 der dem zweiten Kupplungsbereich 30 zugeordneten Übertragungshebelanordnung 63 sind in ihrem radial äußeren Bereich an einem oder mehreren über den Umfang um die Drehachse A verteilt vorgesehenen Zugankern 72 abgestützt. Radial innerhalb von dieser Abstützung sind die Übertragungshebel 62 am Bodenbereich 64 des zweiten Gehäuseteils 24 abgestützt. In ihrem radial inneren Bereich werden diese Übertragungshebel 62 über ein Einrücklager 74 durch eine dem zweiten Kupplungsbereich 30 zugeordnete Stellgliedanordnung 76 beaufschlagt. Bei Beaufschlagungsaktivierung dieser Stellgliedanordnung 76 werden auch die Übertragungshebel 62 in ihrem radial inneren Bereich in Richtung auf die Antriebswelle 18 zu gedrückt, so dass durch die entsprechenden Hebelverhältnisse und die Positionierung der verschiedenen Abstützpunkte nunmehr die radial äußeren Bereiche der Hebel 62 und somit auch die Zuganker 72 in Richtung von der Antriebswelle 18 weg bewegt werden. Wie man in der Fig. 1 erkennt, beaufschlagen die Zuganker 72 an ihrem von den Übertragungshebeln entfernten axialen Endbereich über eine Verschleißnachstellvorrichtung 78 die Anpressplatte 58 des zweiten Kupplungsbereichs 30. Bei dieser Beaufschlagungswirkung wird die Anpressplatte 58 in Richtung auf die Zwischenplatte 22 zu verschoben bzw. vorgespannt, so dass die Kupplungsscheibe 42 mit ihren Reibbelägen 38 zwischen der Zwischenplatte 22 und der Anpressplatte 58 geklemmt wird.

Wie man in der Fig. 1 andeutungsweise erkennt, können in der Zwischenplatte 22 an verschiedenen Umfangsbereichen in den radial äußeren Bereichen Aussparungen vorgesehen sein, in welchen die Zuganker 72 axial bewegbar geführt sind. Durch die Überlappung zwischen dem Randbereich 20 und der Zwischenplatte 22 können diese Aussparungen nach radial außen abgeschlossen werden, so dass eine fliehkraftbedingte Verlagerung der Zuganker 72 nach radial außen verhindert werden kann. Die Zuganker 72 können ebenso wie die verschiedenen Übertragungshebel 60 bzw. 62 als Blechteile ausgeführt sein, wobei darauf geachtet werden muss, dass diese die verschiedenen im Einrückkraftübertragungszustand auftretenden Kräfte im Wesentlichen verformungsfrei aufnehmen können. Die Abstützung der Übertragungshebel 60 bzw. 62 bezüglich des Gehäuseteils 64 bzw. der Zuganker 72 kann über spezielle Abstützorgane, wie z. B. eingelegte Drahtringe oder dergleichen erfolgen. Es ist selbstverständlich, dass hier verschiedenste Arten der eine Relativverlagerung zulassenden Abstützung möglich sind. So können beispielsweise auch am zweiten Gehäuseteil 24 oder/und den verschiedenen Übertragungshebeln 60 bzw. 62 oder/und den Zugankern 72 entsprechende Ausformungen vorgesehen sein. Ferner ist es möglich, die verschiedenen Übertragungshebel 60 bzw. 62 der jeweiligen Übertragungshebelanordnungen miteinander zu koppeln, wobei jedoch darauf geachtet werden muss, dass die Übertragungshebel die erforderliche Verschwenkbewegung durchführen können. Diese Kopplung könnte beispielsweise dadurch erfolgen, dass die Übertragungshebel 60 bzw. 62 einer jeweiligen Übertragungshebelanordnung 61 bzw. 63 zusammen aus einem Blechteil gestanzt werden, wobei durch verbleibende Stegbereiche noch eine Verbindung zwischen den einzelnen Übertragungshebeln vorgesehen ist. Diese Verbindung kann zum Vermeiden von einer Verformung entgegenwirkenden Kräften beispielsweise in demjenigen radialen Bereich vorgesehen sein, in welchem auch eine Abstützung bezüglich anderer Komponenten, also beispielsweise am zweiten Gehäuseteil 24, vorgesehen ist. Ferner sei noch darauf hingewiesen, dass das Einrücklager 68, welches dem ersten Kupplungsbereich 28 zugeordnet ist, über ein die Axialverlagerung zulassendes Lager 80 am zweiten Gehäuseteil 24 geführt sein kann.

Zu den beiden Stellgliedanordnungen 70, 76 sei ausgeführt, dass diese beispielsweise nach Art von Geberzylinder/Nehmerzylinder-Systemen aufgebaut sein können und aus Bauraumgründen auch koaxial zueinander ausgebildet sein können. Durch ein den beiden Stellgliedanordnungen 70, 76 zugeordnetes Ansteuersystem 82 kann dann dafür gesorgt werden, dass die beiden Kupplungsbereiche 28, 30 in definierter Art und Weise und aufeinander abgestimmt mit einer jeweiligen Einrückkraft vermittels der verschiedenen Stellgliedanordnungen 70, 76 beaufschlagt werden, um so auch unter Last dafür zu sorgen, dass ein Drehmomentübertragungswechsel von einer der Getriebeeingangswellen 52, 54 auf die jeweils andere stattfindet. Es ist selbstverständlich möglich, hier andere Stellgliedanordnungen, wie z. B. Spindeltriebe oder sonstige mechanisch arbeitende Systeme einzusetzen, welche jeweilige Antriebsaggregate aufweisen und nach Erzeugung entsprechender Ansteuerbefehle die verschiedenen Kupplungsbereiche 28, 30 in den gewüschten Zustand zu bringen.

Bei der in Fig. 1 dargestellten Doppelkupplung wird also der Einrückzustand der verschiedenen Kupplungsbereiche 28, 30 durch aktives Ansteuern einer jeweiligen Stellgliedanordnung 70, 76 zum Erzeugen einer Einrückkraft erlangt. Es ist kein Kraftspeicher vorhanden, durch welchen die verschiedenen Kupplungsbereiche 28, 30 in den Einrückzustand vorgespannt sind. Vielmehr sorgen die vorangehend beschriebenen Lüftkrafterzeugungssysteme, beispielsweise Tangentialblattffedern oder dergleichen, dafür, dass grundsätzlich die Anpressplatten 56, 58 und somit auch die verschiedenen Kupplungsbereiche 28, 30 in einen ausgerückten Zustand gebracht sind, wenn nicht durch die jeweils zugeordneten Stellgliedanordnungen 70, 76 eine Einrückkraft erzeugt wird. Auf diese Art und Weise kann ausgeschlossen werden, dass beispielsweise bei einem Defekt in einer der Stellgliedanordnungen ein Zustand eintritt, in dem beide Kupplungsbereiche 28, 30 ein Drehmoment übertragen können, was dann, wenn bei beiden Getriebeeingangswellen 52, 54 ein Gang eingelegt ist, zu erheblichen Beschädigungen in einem Getriebe führen kann. Ein weiterer Vorteil der erfindungsgemäßen Ausgestaltung einer Doppelkupplung ist, dass durch im Allgemeinen sehr fein und dosiert erregbare Stellgliedanordnungen 70, 76 die Einrückkraft in entsprechend dosierter Art und Weise bereitgestellt werden kann. Infolgedessen können sehr präzise durchgeführte Einrückvorgänge vorgenommen werden, bei welchen nicht gegen die massive und entsprechend schwer kalkulierbare Kraft eines Kraftspeichers gearbeitet werden muss.

Wie vorangehend bereits ausgeführt, sind beiden Kupplungsbereichen 28, 30 jeweilige Verschleißnachstellvorrichtungen 66, 78 zugeordnet. Die wesentliche Aufgabe dieser Verschleißnachstellvorrichtungen 66, 78 ist das Kompensieren einer verschleißbedingten Dickenabnahme im Bereich der verschiedenen reibend miteinander in Wechselwirkung tretenden Bauteile. Hauptsächlich wird eine derartige Dickenabnahme im Bereich des Reibbeläge 36, 38 auftreten. Eine derartige Dickenabnahme hätte zur Folge, dass im Einrückzustand die Anpressplatten 56, 58 näher an der Zwischenplatte 22 positioniert sind und dementsprechend auch die Übertragungshebel 60 bzw. 62 ihre Lage bezüglich einem nicht verschleißbeeinflussten Zustand ändern würden. Wie im Folgenden detailliert beschrieben wird, vergrößern die Verschleißnachstellvorrichtungen 66, 78 bei Auftreten von Verschleiß ihre Axialerstreckung, so dass vorzugsweise exakt die zuvor auch verschleißbedingt auftretene Dickenabnahme kompensiert werden kann.

Die beiden Verschleißnachstellvorrichtungen 66, 78 sind hinsichtlich ihres konstruktiven Aufbaus und hinsichtlich ihres Wirkmechanismus zueinander im Wesentlichen gleich ausgestaltet. Der detaillierte konstruktive Aufbau wird daher im Folgenden mit Bezug auf die dem zweiten Kupplungsbereich 30 zugeordnete Verschleißnachstellvorrichtung 78 detailliert beschrieben. Entsprechendes gilt dann selbstverständlich auch für die Verschleißnachstellvorrichtung 66 des ersten Kupplungsbereichs 28.

Die Verschleißnachstellvorrichtung 78 umfasst zwei zur Drehachse A im Wesentlichen konzentrisch angeordnete Nachstellringe 84, 86. Der Nachstellring 84 liegt an der Anpressplatte 58 auf und ist beispielsweise in einer Umfangsnut geführt.

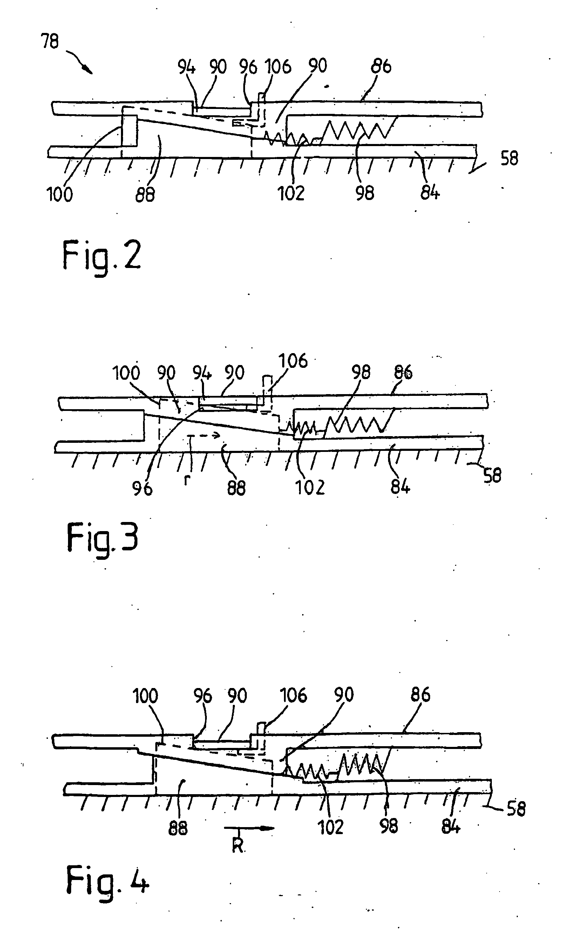

Der Nachstellring 86 liegt, wie im Folgenden noch beschrieben, am Nachstellring 84 auf und wird durch die Zuganker 72 (die Übertragungshebel 60 im Falle des ersten Kupplungsbereichs 28) beaufschlagt. Wie man der Radialansicht der Fig. 2 entnehmen kann, weisen die beiden Nachstellringe 84, 86 an mehreren Umfangspositionierungen zueinander komplementär geformte Rampenbereiche 88, 90 auf, die sich im Wesentlichen in Umfangsrichtung erstrecken. Eine im Folgenden noch beschriebene Umfangsreiativverdrehung der beiden Nachstellringe 84, 86 bezüglich einander führt zu einem gegenseitigen Abgleiten der Rampenbereiche 88, 90 mit der Folge, dass die Gesamterstreckung der die beiden Nachstellringe 84, 86 umfassenden Baugruppe sich verändert.

Ferner weist die Verschleißnachstellvorrichtung 78 ein im Wesentlichen blattfederartig ausgebildetes Erfassungselement 90 auf. Dieses Erfassungselement 90 ist in seinem Endbereich 92 an der Anpressplatte 58 festgelegt und übergreift mit seinem anderen Endbereich 94 den Nachstellring 86. Hierzu weist der Nachstellring 86 eine axial offene Umfangsaussparung 96 auf, deren Umfangserstreckung näherungsweise der Umfangserstreckung des Erfassungselements 90 in seinem Endbereich 94 entspricht. Da das Erfassungselement 90 bezüglich der Anpressplatte 58 grundsätzlich festgelegt ist, d. h. sich bezüglich der Anpressplatte 58 in Umfangsrichtung nicht bewegen kann, ist auf diese Art und Weise auch der Nachstellring 86 gegen Bewegung in Umfangsrichtung blockiert. Dahingegen ist der Nachstellring 84 gegen Drehbewegung in Umfangsrichtung, d. h. gegen Relativdrehung bezüglich der Anpressplatte 58 um die Drehachse A grundsätzlich nicht blockiert. Es ist ferner eine Vorspannfeder 98 vorgesehen, welche am Nachstellring 84 einerseits und am Nachstellring 86 oder der Anpressplatte 58 andererseits derart angreift, dass die Nachstellringe 84, 86 zur Relativdrehung in Umfangsrichtung bezüglich einander vorgespannt sind. Insbesondere ist die Vorspannrichtung derart, dass durch Zusammenwirken der beiden Rampenbereiche 88, 90 eine Drehfreigabe zur Folge hätte, dass die Gesamtaxialerstreckung der die beiden Nachstellringe 84, 86 umfassenden Baugruppe zunimmt.

Die Verschleißnachstellvorrichtung weist ferner einen im Bereich radial innerhalb der Nachstellringe 84, 86 vorgesehenen und an diesen sich nach radial außen hin abstützenden Arretierschieber 100 auf. Man erkennt in Fig. 2, dass der Arretierschieber 100 von keilartiger Gestalt ist und sich an der Anpressplatte 58 einerseits und dem Erfassungselement 90 andererseits abstützt bzw. den zwischen diesen beiden Elementen gebildeten Zwischenraum ausfüllt. Durch eine Vorspannfeder 102 ist der Arretierschieber 94 zur Bewegung in der Umfangsrichtung r vorgespannt, wobei dies die gleiche Bewegungsrichtung ist, in welcher auch der Nachstellring 84 zur Bewegung durch die Feder 98 vorgespannt ist. Vorteilhafterweise ist vorgesehen, dass die Vorspannfeder 102 in ihrem nicht am Arretierschieber 100 angreifenden Endbereich bezüglich des Nachstellrings 84 bzw. dem mit diesem gekoppelten Endbereich der Vorspannfeder 98 gekoppelt ist. Der Vorteil davon ist, dass aufgrund der Tatsache, dass die beiden Bauteile Nachstellring 84 und Arretierschieber 100 sich in der gleichen Richtung R bzw. r bewegen, die für den Arretierschieber 100 vorgesehene Vorspannkraft unabhängig davon, in welchem Ausmaß Verschleiß bereits kompensiert worden ist, gleich gehalten werden kann.

An der Gehäuseanordnung 12 ist ein weiteres Erfassungselement 104 vorgesehen, das beispielsweise eine im ersten Gehäuseteil 14 vorgesehene Öffnung durchgreift und mit einem Blockierabschnitt 106 nach radial innen greift. Mit diesem Blockierabschnitt 106, welcher auch in Fig. 2 schematisch angedeutet ist, überlappt sich das Erfassungselement 104 in radialer Richtung und in Umfangsrichtung mit dem radial äußeren Endbereich 94 des Erfassungselements 90.

Im Folgenden wird die Funktionsweise dieser Verschleißnachstellvorrichtung 78 zur Kompensation von im Betrieb aufgetretenem Verschleiß der Reibbeläge 38 beschrieben. Hier wird vor allem Bezug auf die Fig. 2 bis 4 genommen.

Die Fig. 2 stellt den Zustand dar, in welchem die verschiedenen Komponenten der Verschleißnachstellvorrichtung 78 sich befinden, wenn die Doppelkupplung 10 neu ist, d. h. im Bereich der Reibbeläge 38 im Wesentlichen noch kein Verschleiß aufgetreten ist. Das Erfassungselement 90 weist in seinem Endbereich 94 einen geringen axialen Abstand zum Blockierabschnitt 106 des Erfassungselements 104 auf. Ferner beaufschlagt das Erfassungselement 90 mit seinem Endbereich 94 die beiden Nachstellringe 84, 86 in axialer Richtung derart, dass die durch die Feder 98 bereitgestellte Vorspannkraft nicht zu einer Relativverdrehung der beiden Nachstellringe 84, 86 führen kann. Auch kann die durch die Feder 100 bereitgestellte Vorspannkraft nicht zu einer Verschiebung des Arretierschiebers 100 führen.

Tritt nun im Betrieb ein Verschleiß auf, so bewegt sich die Anpressplatte 58 näher an die Zwischenplatte 22 heran. Dabei nähert sich auch das Erfassungselement 90 mit seinem Endbereich 94 dem Blockierabschnitt 106 des Erfassungselements 104 an, bis diese beiden Komponenten schließlich in gegenseitige Anlage gelangen. Ein weiter zunehmender Verschleiß hat zur Folge, dass, wie in Fig. 3 erkennbar, aufgrund der Tatsache, dass die Anpressplatte 58 sich bezüglich der Gehäuseanordnung 12 und somit auch bezüglich des Blockierabschnitts 106 in der Einrücklage verlagert hat, das Erfassungselement 90 in seinem Endbereich 94 durch den Blockierabschnitt 106 axial festgehalten wird und somit vom Nachstellring 86 abhebt, vorzugsweise weiterhin jedoch zumindest teilweise in die Umfangsausnehmung 96 eingreift. Gleichzeitig mit dieser Verlagerung bzw. Auslenkung des Erfassungselements 90 bezüglich der Anpressplatte 58 wird dem Arretierschieber 100 eine unter der Vorspannwirkung der Vorspannfeder 100 erzeugte geringe Umfangsbewegung ermöglicht, welche mit der Auslenkung des Erfassungselements 90 einhergeht. Das heißt, auch bei verschleißinduzierter Auslenkung des Erfassungselements 90 bezüglich der Anpressplatte 58 füllt der Arretierschieber 100 den zwischen dem Erfassungselement 90 nahe dessen Endbereich 94 und der Anpressplatte 58 gebildeten Zwischenraum aus und verhindert somit, eine Zurückverlagerung des Erfassungselements 90 aufgrund seiner federelastischen Ausgestaltung.

Solange durch die Stellgliedanordnung 76 für den zweiten Kupplungsbereich 30 eine Einrückkraft bereitgestellt wird, kann das axiale Abheben des Erfassungselements 90 vom Nachstellring 86 nicht zu einer Relativverdrehung der beiden Nachstellringe 86, 84 bezüglich einander führen. Soll jedoch durch Mindern oder Aufgeben der Krafteinwirkung der Stellgliedanordnung 76 der Kupplungsbereich 30 in einen ausgerückten Zustand gebracht werden, so wird auch die massive Kraftbeaufschlagung des Nachstellrings 86 durch die Zuganker 72 aufgehoben. Es ist dann nur noch eine Kraftkomponente vorhanden, erzeugt durch Lüftkrafterzeugungsanordnung, welche die Anpressplatte 58 und somit den Nachstellring 86 gegen die Zuganker 72 vorspannt. Da jedoch dieser Kraftkomponente im Wesentlichen keine Gegenkraft entgegengesetzt wird, können in diesem Zustand die beiden Nachstellringe 84, 86 unter Wirkung der Feder 98 eine Relativumfangsbewegung bezüglich einander ausführen, bei welcher der Nachstellring 86 bezüglich der Anpressplatte 58 nicht gedreht wird, der Nachstellring 84 jedoch eine Umfangsdrehung bezüglich der Anpressplatte 58 ausführt. Durch Zusammenwirken der Rampenbereiche 88, 90 führt diese Relativdrehbewegung jedoch dazu, dass, wie in Fig. 4 erkennbar, der Nachstellring 86 sich axial bezüglich der Anpressplatte 58 verlagert, d. h. sich von dieser weg bewegt. Diese Verlagerung dauert so lange an, bis der Nachstellring 86 im Bereich seiner Umfangsausnehmung 96 wieder am Erfassungselement 90 anstößt. In diesem Moment endet auch die Drehbewegung des Nachstellrings 84 in der Richtung R. Der zuvor durch bereichsweise Verlagerung des Erfassungselements 90 bezüglich der Anpressplatte 58 erfasste Verschleiß ist nunmehr vollständig kompensiert, wobei hier von Bedeutung ist, dass das Ausmaß, in welchem das Erfassungselement 90 vom Nachstellring 86 abgehoben hat, im Wesentlichen genau dem Ausmaß der Dickenabnahme der Reibbeläge 38 bzw. der sonstigen reibmäßig beaufschlagten Bereiche entspricht. Die aus Reibbelägen 38, Anpressplatte 58 und Verschleißnachstellvorrichtung 78 gebildete Baugruppe hat in dem in Fig. 4 dargestellten Zustand dann im Wesentlichen wieder die gleiche Gesamtaxialerstreckung, wie im Neuzustand, so dass im Bereich der Stellgliedanordnung 76 eine Dickenabnahme der Reibbeläge 38 nicht spürbar wird.

Die Verschleißnachstellvorrichtung 78 gestattet bei sehr einfachem Aufbau eine präzise Verschleißkompensation. Es sei darauf hingewiesen, dass die Nachstellwegbegrenzung, die, wie vorangehend beschrieben, im dargestellten Beispiel durch das auch der Verschleißerfassung dienende Erfassungselement 90 bereitgestellt ist, selbstverständlich auch durch den Arretierschieber 90 erfolgen kann. Dieser kann beispielsweise einen nach radial außen ragenden Vorsprung aufweisen, der in eine zugeordnete Umfangsaussparung im Nachstellring 84 eingreift. Diese Umfangsaussparung im Nachstellring 84 weist eine größere Umfangserstreckung auf, als der Vorsprung am Arretierschieber 100. Bei Auftreten von Verschleiß verlagert sich der Arretierschieber 100 in Umfangsrichtung und somit auch bezüglich des Nachstellrings 84. Dieser kann bei einem dann folgenden Ausrückvorgang aufgrund dann nicht mehr vorhandener Blockierwirkung in Umfangsrichtung sich bezüglich des Nachstellrings 86 so weit verlagern, bis er mit einem Umfangsrand seiner Umfangsaussparung am nach radial außen greifenden Vorsprung des Arretierschiebers 100 zur Anlage kommt. Diese Ausgestaltung hat den Vorteil, dass durch die Ausgestaltung des keilartigen Arretierschiebers 100 Einfluss auf das Ausmaß der Kompensation genommen werden kann. So hat eine relativ flache keilartige Ausgestaltung zur Folge, dass bereits bei geringem Verschleiß eine vergleichsweise große Umfangsbeweung des Arretierschiebers 100 und eine entsprechend große Drehbewegung des Nachstellrings 84 auftreten wird, was eine stärkere Verschleißkompensation, also Überkompensation zur Folge hat. Eine steilere keilartige Ausgestaltung hat in entsprechender Weise eine Unterkompensation zur Folge. Diese Effekte können gewünschtenfalls ausgenutzt werden. Des Weiteren können die beiden Erfassungselemente 90 und 104 andere Formgebungen aufweisen und andere Einbaulagen aufweisen, als in den Figuren dargestellt. So könnte beispielsweise das Erfassungselement 90 sich näherungsweise in Umfangsrichtung erstrecken und in seinem nicht an der Anpressplatte 58 festgelegten Endbereich einen in radialer Richtung dann die Nachstellringe 84, 88 übergreifenden Endbereich aufweisen.

Da bei der erfindungsgemäßen Doppelkupplung beiden Kupplungsbereichen 28, 30 voneinander unabhängig wirkende Verschleißnachstellvorrichtungen 66 bzw. 78 zugeordnet sind, die, wie vorangehend beschrieben, im Wesentlichen gleich aufgebaut sein können und die gleiche Wirkcharakteristik aufweisen können, kann für beide Kupplungsbereiche eine über deren Betriebslebensdauer hinweg gleichbleibende Kuppelcharakteristik bereitgestellt werden. Irgendwelche Anpassungsmaßnahmen im Bereich der verschiedenen Stellgiedanordnungen 70, 76 sind nicht erforderlich.

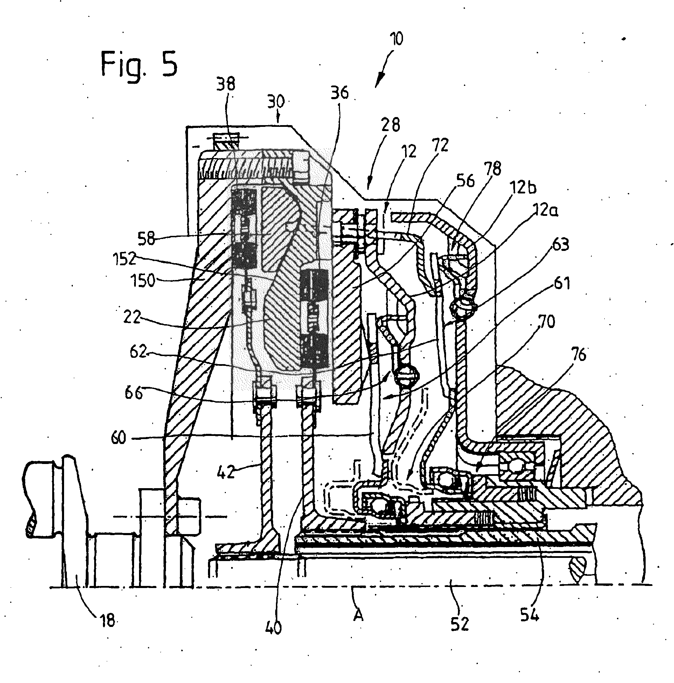

In Fig. 5 ist eine nicht erfindungsgemäße Doppelkupplung 10 gezeigt. Auch diese Doppelkupplung 10 ist grundsätzlich derart aufgebaut, dass bei den beiden Kupplungsbereichen 28, 30 durch die jeweils zugeordneten Übertragungshebelanordnungen 61, 63 bzw. die Übertragungshebel 60, 62 derselben und durch die Stellgliedanordnungen 70, 76, welche hier jeweils als Nehmerzylindersysteme ausgestaltet sind, die Anpressplatten 22, 56 in Einrückrichtung vorgespannt werden. Es sei in diesem Zusammenhang erwähnt, dass die Übertragungshebelanordnungen 60, 61 auch integral durch einen ringartigen Bereich verbundene und aus einem Stahlmaterial gestanzte Hebelelemente umfassen kann, die grundsätzlich auch nach Art einer Membranfeder wirksam sein können, dadurch nämlich, dass sie in Richtung Auskuppeln vorgespannt sind und dann entgegen ihrer eigenen Vorspannung durch die Stellgliedanordnungen 70, 76 in Einrückrichtung beaufschlagt werden und somit die Beaufschlagungswirkung der Stellgliedanordnungen 70, 76 auf die zugeordneten Anpressplatten 56, 58 übertragen.

Bei der in Fig. 5 gezeigten Ausgestaltungsform sind die beiden Anpressplatten 56, 58 zwar grundsätzlich beidseits der Zwischenplatte 22 angeordnet, die Zwischenplatte 22 bildet nunmehr aber nur für den Kupplungsbereich 28 bzw. die Anpressplatte 56 desselben ein Widerlager. Die Zwischenplatte 22 ist in ihrem radial äußeren Bereich durch Schraubbolzen oder dergleichen mit einem weiteren Plattenteil 150 verbunden, das radial innen an die Welle 18 angebunden ist. Dieses Plattenteil 150 bildet nunmehr das Widerlager für den zweiten Kupplungsbereich 30. Man erkennt, dass die Anpressplatte 58 desselben in einer Einsenkung 152 der Zwischenplatte 22 aufgenommen ist und durch ein Kraftübertragungselement 72 zur Bewegung in Richtung auf das Plattenteil 50 bzw. die Kupplungsscheibe 42 zu beaufschlagbar ist. Die beiden Anpressplatten 56, 58 werden hier also zur Erlangung eines Einrückzustands durch die jeweiligen Stellgliedanordnungen 70, 76 unter Vermittlung der Übertragungshebelanordnungen 60, 61 und im Falle des Kupplungsbereichs 30 auch des Kraftübertragungselements 72 zur Bewegung in der gleichen axialen Richtung beaufschlagt. Der gesamte Widerlagerbereich dieser Anordnung ist also im Wesentlichen gebildet durch die beiden Platten 22, 150, die durch ihre radial außen liegende Verbindung letztendlich auch eine gehäuseartige Konfiguration bilden. Die Beaufschlagungskraft des Kraftübertragungselements wird durch mehrere in Umfangsrichtung aufeinander folgende Vorsprünge, die verschiedene Bauteile in dafür vorgesehenen Öffnungen durchsetzen, auf die Anpressplatte 58 übertragen.

Man erkennt in Fig. 5 weiter, dass die Gehäuseanordnung 12 hier zwei Gehäuseteile 12a und 12b umfasst. Das Gehäuseteil 12a ist in seinem radial äußeren Bereich beispielsweise an mehreren Umfangspositionen mit der Zwischenplatte 22 und somit auch dem Plattenteil 150, allgemein also dem Widerlagerbereich der Doppelkupplung, verbunden. Die Übertragungshebelanordnung 61 des Kupplungsbereichs 28 ist bezüglich des Gehäuseteils 12a in einem radial außerehalb der Abstützung an der Anpressplatte 56 liegenden Bereich über eine allgemein mit 66 bezeichnete Verschleißnachstellvorrichtung abgestützt. Bei Auftreten von Verschleiß im Bereich der Kupplungsscheibe 40 verschiebt sich also nicht nur die Anpressplatte 56, sondern es verschiebt sich auch der Abstützpunkt für die Übertragungshebelanordnung 61, so dass dennoch die Einbaulage der einzelnen Übertragungshebel 60 derselben gleichbleibt. Es ist lediglich eine entsprechende Nachführung im Bereich der Stellgliedanordnung 70 erforderlich.

Das Gehäuseteil 12b der Gehäuseanordnung ist in seinem radial äußeren Bereich ebenfalls mit der Zwischenplatte 22 und über diese wiederum mit dem Plattenteil 150 fest gekoppelt, ist also ebenfalls mit dem Widerlagerbereich der Doppelkupplung 10 gekoppelt. Am Gehäuseteil 12b stützt sich mit ihrem radial äußeren Bereich die Übertragungshebelanordnung 63 über eine Verschleißnachstellvorrichtung 78 ab, während radial innerhalb dieser Abstützung bezüglich der Anpressplatte 58, nämlich an dem die Einrückkraft auf die Anpressplatte 58 übertragenden Kraftübertragungselement 72 erfolgt. Auch hier verändert sich bei Auftreten von Verschleiß im Bereich der Kupplungsscheibe 42 nicht nur die Lage der Anpressplatte 48, sondern auch die Übertragungshebelanordnung 63 verschiebt sich in axialer Richtung, kann jedoch grundsätzlich ihre Einbaulage beibehalten, wobei nunmehr eine entsprechende Nachführung im Bereich der Stellgliedanordnung 76 erforderlich wird.

Die beiden vorangehend beschriebenen Verschleißnachstellvorrichtungen 66, 78 können von herkömmlichem Aufbau sein, beispielsweise wie vorangehend beschrieben, können also zumindest ein bei Auftrteten von Verschleiß unter der Vorspannung eines Federelements in Umfangsrichtung bewegbares und dabei durch Rampen- bzw. Keilwirkung axial verlagerbares oder eine Axialverlagerung eines anderen Bauteils induzierendes Nachstellelement, beispielsweise ein Nachstellring, aufweisen.

## Patentansprüche

1. Mehrfach-Kupplungsanordnung, insbesondere Doppelkupplungsanordnung, umfassend:
- eine Gehäuseanordnung (12), welche mit einem Antriebsorgan (18) zur gemeinsamen Drehung um eine Drehachse (A) gekoppelt oder koppelbar ist,
- einen ersten Kupplungsbereich (28) mit einer ersten Anpressplatte (56), durch welche ein Reibbereich (36) einer ersten Kupplungsscheibe (40) gegen einen mit der Gehäuseanordnung (12) drehbaren, als Zwischenplatte (22) ausgebildeten Widerlagerbereich pressbar ist, sowie einer ersten Stellgliedanordnung (70), durch welche der erste Kupplungsbereich (28) zur Durchführung von Stellvorgängen aktivierbar ist,
- einen zweiten Kupplungsbereich (30) mit einer zweiten Anpressplatte (58), durch welche ein Reibbereich (38) einer zweiten Kupplungsscheibe (42) gegen die Zwischenplatte (22) pressbar ist, sowie einer zweiten Stellgliedanordnung (76), durch welche der zweite Kupplungsbereich (30) zur Durchführung von Stellvorgängen aktivierbar ist,
wobei die erste Stellgliedanordnung (70) und die zweite Stellgliedanordnung (76) zur Erzeugung einer den jeweils zugeordneten Kupplungsbereich (28, 30) in Richtung Einkuppeln beaufschlagenden Stellkraft ausgebildet ist und der erste Kupplungsbereich (28) und der zweite Kupplungsbereich (30) jeweils eine Übertragungshebelanordnung (61, 63) aufweist, welche durch die erste Stellgliedanordnung (70) bzw. die zweite Stellgliedanordnung (76) beaufschlagbar ist und bezüglich der Gehäuseanordnung (12) einerseits und der jeweils zugeordneten Anpressplatte (56, 58) andererseits abgestützt ist, wobei eine (61) der Übertragungshebelanordnungen (61, 63) an einer Innenseite der Gehäuseanordnung (12) abgestützt ist und die andere (63) der Übertragungshebelanordnungen (61, 63) an einer Außenseite der Gehäuseanordnung (12) abgestützt ist,
wobei bei einem (28) der Kupplungsbereiche (28, 30) die zugehörige Übertragungshebelanordnung (61) bezüglich der Gehäuseanordnung (12) in einem Bereich radial außerhalb der Abstützung bezüglich der Anpressplatte (56) abgestützt ist und bei dem anderen (30) der Kupplungsbereiche (28, 30) die zugehörige Übertragungshebelanordnung (63) bezüglich der Gehäuseanordnung (12) in einem Bereich radial innerhalb der Abstützung bezüglich der Anpressplatte (58) abgestützt ist,
wobei bei dem anderen (30) der Kupplungsbereiche (28, 30) wenigstens ein Übertragungsglied (72) vorgesehen ist, über welches die Übertragungshebelanordnung (63) bezüglich der Anpressplatte (58) abgestützt ist,
**dadurch gekennzeichnet,**
**dass** das wenigstens eine Übertragungsglied (72) als Blechteil ausgeführt ist und in einer im äußeren Bereich der Zwischenplatte (22) vorgesehenen Aussparung axial bewegbar geführt ist, und
**dass** die Gehäuseanordnung (12) ein zur Ankopplung an das Antriebsorgan (18) vorgesehenes topfartiges erstes Gehäuseteil (14) sowie ein zur Abstützung beider Übertragungshebelanordnungen (61, 63) vorgesehenes topfartiges zweites Gehäuseteil (24) aufweist, wobei ein Randbereich (20) des topfartigen ersten Gehäuseteils (14) die Zwischenplatte (22) überlappt zum Abschließen jeder ein Übertragungsglied (72) aufweisenden Aussparung nach radial außen, und wobei ein Randbereich (26) des topfartigen zweiten Gehäuseteils (24) mit der Zwischenplatte (22) radial innerhalb der Verbindung der Zwischenplatte (22) mit dem topfartigen ersten Gehäuseteil (14) verbunden ist, und wobei die beiden Übertragungshebelanordnungen an einem Bodenbereich (64) des zweiten Gehäuseteils abgestützt sind.

2. Kupplungsanordnung nach Anspruch 1,
**dadurch gekennzeichnet, dass** die Übertragungshebelanordnung (63) des anderen Kupptungsbereiches (30) an der Außenseite der Gehäuseanordnung (12) abgestützt ist.

3. Kupplungsanordnung nach einem der Ansprüche 1 bis 2,
**dadurch gekennzeichnet, dass** die erste Anpressplatte (56) und die zweite Anpressplatte (58) durch die jeweils zugeordnete Stellgliedänordnung (70, 76) in entgegengesetzten axialen Richtungen beaufschlagbar sind.

4. Kupplungsanordnung nach einem der Anspruche 1 bis 3,
**dadurch gekennzeichnet, dass** wenigstens eine der Stellgliedanordnungen (70,76) auf den zugeordneten Kupplungsbereich (28,30), vorzugsweise die Anpressplatte dieses Kupplungsbereichs, über eine Verschfeißnachstellvorrichtung (66, 78) einwirkt.

5. Kupplungsanordnung nach Anspruch 4, **dadurch gekennzeichnet, dass** die Verschleißnachstellvorrichtung (66, 78) umfasst:
- wenigstens ein bei Durchführung eines Verschleißnachstellvorgangs bezüglich der Anpressplatte (56, 58) verlagerbares Nachstellelement (84, 86),
- ein bezüglich der Gehäuseanordnung (12) feststehendes erstes Erfassungselement (104),
- ein an der Anpressplatte (56, 58) gehaltenes und bei Auftreten von Verschleiß durch Zusammenwirkung mit dem ersten Erfassungselement (104) bezüglich der Anpressplatte (56, 58) auslenkbares zweites Erfassungselement (90),
- ein Arretierelement (100), durch welches das zweite Erfassungselement (90) bezüglich der Anpressplatte (56, 58) in seiner verschleißbedingten Auslenklage arretierbar ist,
wobei das Arretierelement (100) bei Auftreten von Verschleiß und dabei erzeugter Auslenkung des zweiten Erfassungselements (90) bezüglich der Anpressplatte (56, 58) und bezüglich des zweiten Erfassungselements (104) verlagerbar ist und wobei durch das zweite Erfassungselement (90) oder/und das Arretierelement (100) eine Nachstellbewegung des wenigstens einen Nachstellelements (84, 86) begrenzbar ist.

6. Kupplungsanordnung nach Anspruch 5,
**dadurch gekennzeichnet, dass** das zweite Erfassungselement (90) blattfederartig ausgebildet ist und in einem Endbereich (92) an der Anpressplatte (56, 58) festgelegt ist

7. Kupplungsanordnung nach Anspruch 5 oder 6, **dadurch gekennzeichnet, dass** bei Auftreten von Verschleiß das zweite Erfassungselement (90) wenigstens mit einem Längenbereich (94) in Richtung von der Anpressplatte (56, 58) weg bewegt wird, dass das Arretierelement (100) keilartig ausgebildet ist und dass durch Vorspannung das keilartig ausgebildete Arretierelement (100) in einen zwischen der Anpressplatte (56, 58) und dem Längenbereich (94) des zweiten Erfassungselements (90) gebildeten Zwischenraum vorgespannt ist.

8. Kupplungsanordnung nach einem der Ansprüche 4 bis 7,
**dadurch gekennzeichnet, dass** das wenigstens eine Nachstellelement (84, 86) einen bei Durchführung einer Verschleißnachstellung bezüglich der Anpressplatte (56,58) um die Drehachse (A) drehbaren Nachstellring (84, 86) umfasst.

9. Kupplungsanordnung nach einem der Ansprüche 1 bis 3,
**dadurch gekennzeichnet, dass** wenigstens eine der Übertragungshebelanordnungen (61, 63) bezüglich der Gehäuseanordnung (12) über eine Verschleißnachstellvorrichtung (66, 78) abgestützt ist.

## Claims

1. Multiple clutch arrangement, in particular dual clutch arrangement, comprising:
- a housing arrangement (12) which is coupled or can be coupled to a drive member (18) in order to rotate them together about a rotational axis (A),
- a first clutch region (28) having a first pressure plate (56), using which it is possible to press a friction region (36) of a first clutch plate (40) against an abutment region which is configured as an intermediate plate (22) and can be rotated with the housing arrangement (12), and having a first actuator arrangement (70), using which it is possible to activate the first clutch region (28) in order to carry out adjusting processes,
- a second clutch region (30) having a second pressure plate (58), using which it is possible to press a friction region (38) of a second clutch plate (42) against the intermediate plate (22), and having a second actuator arrangement (76), using which it is possible to activate the second clutch region (30) in order to carry out adjusting processes,
the first actuator arrangement (70) and the second actuator arrangement (76) being configured to produce an adjusting force which acts on the respectively assigned clutch region (28, 30) in the direction of clutch engagement, and the first clutch region (28) and the second clutch region (30) each having a transmission lever arrangement (61, 63) which can be acted on by the first actuator arrangement (70) or the second actuator arrangement (76) and is supported firstly with respect to the housing arrangement (12) and secondly with respect to the respectively assigned pressure plate (56, 58),
one (61) of the transmission lever arrangements (61, 63) being supported on an inner side of the housing arrangement (12) and the other one (63) of the transmission lever arrangements (61, 63) being supported on an outer side of the housing arrangement (12),
in one (28) of the clutch regions (28, 30), the associated transmission lever arrangement (61) being supported with respect to the housing arrangement (12) in a region radially outside the support with respect to the pressure plate (56) and, in the other one (30) of the clutch regions (28, 30), the associated transmission lever arrangement (63) being supported with respect to the housing arrangement (12) in a region radially inside the support with respect to the pressure plate (58),
in the other one (30) of the clutch regions (28, 30), at least one transmission member (72) being provided, via which the transmission lever arrangement (63) is supported with respect to the pressure plate (58),
**characterized**
**in that** the at least one transmission member (72) is configured as a sheet-metal part and is guided axially movably in a cut-out which is provided in the outer region of the intermediate plate (22), and
**in that** the housing arrangement (12) has a pot-like first housing part (14) which is provided for coupling to the drive member (18) and a pot-like second housing part (24) which is provided for supporting both transmission lever arrangements (61, 63), an edge region (20) of the pot-like first housing part (14) overlapping the intermediate plate (22) in order to close each cut-out which has a transmission member (72) radially to the outside, and an edge region (26) of the pot-like second housing part (24) being connected to the intermediate plate (22) radially within the connection of the intermediate plate (22) to the pot-like first housing part (14), and the two transmission lever arrangements being supported on a bottom region (64) of the second housing part.

2. Clutch arrangement according to Claim 1,
**characterized in that** the transmission lever arrangement (63) of the other clutch region (30) is supported on the outer side of the housing arrangement (12).

3. Clutch arrangement according to either of Claims 1 to 2,
**characterized in that** it is possible for the first pressure plate (56) and the second pressure plate (58) to be acted on in opposite axial directions by the respectively assigned actuator arrangement (70, 76).

4. Clutch arrangement according to one of Claims 1 to 3,
**characterized in that** at least one of the actuator arrangements (70, 76) acts, via a wear-compensation device (66, 78), on the assigned clutch region (28, 30), preferably the pressure plate of the said clutch region.

5. Clutch arrangement according to Claim 4, **characterized in that** the wear-compensation device (66, 78) comprises:
- at least one compensation element (84, 86) which can be displaced with respect to the pressure plate (56, 58) when carrying out a wear-compensation process,
- a first sensing element (104) which is fixed in position with respect to the housing arrangement (12),
- a second sensing element (90) which is held on the pressure plate (56, 58) and, when wear occurs, can be deflected with respect to the pressure plate (56, 58) by interaction with the first sensing element (104),
- a locking element (100), using which it is possible to lock the second sensing element (90) in its wear-induced deflecting position with respect to the pressure plate (56, 58),
it being possible to displace the locking element (100), when wear occurs and deflection of the second sensing element (90) is produced as a result, with respect to the pressure plate (56, 58) and with respect to the second sensing element (90), and it being possible to limit a compensation movement of the at least one compensation element (84, 86) by means of the second sensing element (90) and/or the locking element (100).

6. Clutch arrangement according to Claim 5,
**characterized in that** the second sensing element (90) is configured as a leaf spring and in one end region (92) is fixed on the pressure plate (56, 58).

7. Clutch arrangement according to Claim 5 or 6,
**characterized in that**, when wear occurs, the second sensing element (90) is moved in the direction away from the pressure plate (56, 58) with at least one length region (94), **in that** the locking element (100) is configured like a wedge, and **in that**, by prestressing, the locking element (100) of wedge-like configuration is prestressed into an intermediate space which is formed between the pressure plate (56, 58) and the length region (94) of the second sensing element (90).

8. Clutch arrangement according to one of Claims 4 to 7,
**characterized in that** the at least one compensation element (84, 86) comprises a compensation ring (84, 86) which can be rotated about the rotational axis (A) when carrying out wear compensation with respect to the pressure plate (56, 58).

9. Clutch arrangement according to one of Claims 1 to 3, **characterized in that** at least one of the transmission lever arrangements (61, 63) is supported with respect to the housing arrangement (12) via a wear-compensation device (66, 78).

## Revendications

1. Arrangement d'embrayage multiple, notamment arrangement d'embrayage double comprenant :
- un arrangement de boîtier (12) qui est accouplé ou peut être accouplé avec un organe d'entraînement (18) en vue d'une rotation commune autour d'un axe de rotation (A),
- une première zone d'accouplement (28) comprenant une première plaque de compression (56) par le biais de laquelle une zone de frottement (36) d'un premier disque d'embrayage (40) peut être comprimée contre une zone de butée configurée comme plaque intermédiaire (22) et pouvant tourner avec l'arrangement de boîtier (12) ainsi qu'un premier arrangement d'éléments de positionnement (70) par le biais duquel la première zone d'accouplement (28) peut être activée pour effectuer des opérations de positionnement,
- une deuxième zone d'accouplement (30) comprenant une deuxième plaque de compression (58) par le biais de laquelle une zone de frottement (38) d'un deuxième disque d'embrayage (42) peut être comprimée contre la plaque intermédiaire (22) ainsi qu'un deuxième arrangement d'éléments de positionnement (76) par le biais duquel la deuxième zone d'accouplement (30) peut être activée pour effectuer des opérations de positionnement,
le premier arrangement d'éléments de positionnement (70) et le deuxième arrangement d'éléments de positionnement (76) étant configurés pour produire une force de positionnement appliquée à la zone d'accouplement (28, 30) à chaque fois associée dans le sens de l'embrayage, et la première zone d'accouplement (28) et la deuxième zone d'accouplement (30) présentant chacune un arrangement de levier de transmission (61, 63) qui peut être commandé par le premier arrangement d'éléments de positionnement (70) ou le deuxième arrangement d'éléments de positionnement (76) et qui est soutenu d'un côté par rapport à l'arrangement de boîtier (12) et d'un autre côté par rapport à la plaque de compression (56, 58) à chaque fois associée,
l'un (61) des arrangements de levier de transmission (61, 63) étant soutenu sur un côté intérieur de l'arrangement de boîtier (12) et l'autre (63) arrangement de levier de transmission (61, 63) étant soutenu sur un côté extérieur de l'arrangement de boîtier (12),
au niveau de l'une (28) des zones d'accouplement (28, 30), l'arrangement de levier de transmission (61) correspondant étant soutenu par rapport à l'arrangement de boîtier (12) dans une zone située dans le sens radial à l'extérieur du soutien par rapport à la plaque de compression (56) et au niveau de l'autre (30) zone d'accouplement (28, 30), l'arrangement de levier de transmission (63) correspondant étant soutenu par rapport à l'arrangement de boîtier (12) dans une zone située dans le sens radial à l'intérieur du soutien par rapport à la plaque de compression (58),
au niveau de l'autre (30) zone d'accouplement (28, 30) étant prévu au moins un élément de transmission (72) par le biais duquel l'arrangement de levier de transmission (63) est soutenu par rapport à la plaque de compression (58),
**caractérisé en ce que**
l'au moins un élément de transmission (72) est réalisé sous forme de pièce en tôle et est guidé de manière déplaçable axialement dans un évidement prévu dans la région extérieure de la plaque intermédiaire (22), et
**en ce que** l'arrangement de boîtier (12) présente une première partie de boîtier (14) en forme de pot prévue pour l'accouplement à l'organe d'entraînement (18) ainsi qu'une deuxième partie de boîtier (24) en forme de pot prévue pour le soutien des deux arrangements de levier de transmission (61, 63), une zone de bord (20) de la première partie de boîtier (14) en forme de pot chevauchant la plaque intermédiaire (22) pour terminer chaque évidement présentant un élément de transmission (72) dans le sens radial vers l'extérieur, et une zone de bord (26) de la deuxième partie de boîtier (24) en forme de pot étant connectée à la plaque intermédiaire (22) dans le sens radial vers l'intérieur de la connexion de la plaque intermédiaire (22) à la première partie de boîtier (14) en forme de pot, et les deux arrangements de levier de transmission étant soutenus au niveau d'une zone de fond (64) de la deuxième partie de boîtier.

2. Arrangement d'embrayage selon la revendication 1, **caractérisé en ce que** l'arrangement de levier de transmission (63) de l'autre zone d'accouplement (30) est soutenu sur le côté extérieur de l'arrangement de boîtier (12).

3. Arrangement d'embrayage selon l'une des revendications 1 à 2, **caractérisé en ce que** la première plaque de compression (56) et la deuxième plaque de compression (58) peuvent être sollicitées dans des directions axiales opposées par le biais de l'arrangement d'éléments de positionnement (70, 76) à chaque fois associé.

4. Arrangement d'embrayage selon l'une des revendications 1 à 3, **caractérisé en ce qu'**au moins l'un des arrangements d'éléments de positionnement (70, 76) agit sur la zone d'accouplement (28, 30) associée, de préférence la plaque de compression de cette zone d'accouplement, par le biais d'un dispositif de rattrapage de l'usure (66, 78).

5. Arrangement d'embrayage selon la revendication 4, **caractérisé en ce que** le dispositif de rattrapage de l'usure (66, 78) comprend :
- au moins un élément de rattrapage (84, 86) qui peut changer de position par rapport à la plaque de compression (56, 58) lors de l'exécution d'une opération de rattrapage de l'usure,
- un premier élément de saisie (104) fixe par rapport à l'arrangement de boîtier (12),
- un deuxième élément de saisie (90) maintenu contre la plaque de compression (56, 58) et pouvant être dévié par rapport à la plaque de compression (56, 58) en cas d'usure, par interaction avec le premier élément de saisie (104),
- un élément d'arrêt (100) à l'aide duquel le deuxième élément de saisie (90) peut être arrêté dans sa position de déviation due à l'usure par rapport à la plaque de compression (56, 58),
l'élément d'arrêt (100) pouvant être changé de position par rapport à la plaque de compression (56, 58) et par rapport au deuxième élément de saisie (104) en présence d'une usure et de la déviation ainsi produite du deuxième élément de saisie (90) et un mouvement de rattrapage de l'au moins un élément de rattrapage (84, 86) pouvant être limité par le biais du deuxième élément de saisie (90) et/ou de l'élément d'arrêt (100).

6. Arrangement d'embrayage selon la revendication 5, **caractérisé en ce que** le deuxième élément de saisie (90) est réalisé sous la forme d'un ressort à lames et il est fixé dans une zone d'extrémité (92) sur la plaque de compression (56, 58).

7. Arrangement d'embrayage selon la revendication 5 ou 6, **caractérisé en ce qu'**en présence d'usure, le deuxième élément de saisie (90) est éloigné d'au moins une zone longitudinale (94) en direction de la plaque de compression (56, 58), **en ce que** l'élément d'arrêt (100) est réalisé sous la forme d'une clavette et **en ce que** l'élément d'arrêt (100) en forme de clavette est précontraint par précontrainte dans un espace intermédiaire formé entre la plaque de compression (56, 58) et la zone longitudinale (94) du deuxième élément de saisie (90).

8. Arrangement d'embrayage selon l'une des revendications 4 à 7, **caractérisé en ce qu'**au moins un élément de rattrapage (84, 86) comprend une bague de rattrapage (84, 86) qui peut tourner autour de l'axe de rotation (A) par rapport à la plaque de compression (56, 58) lors de la réalisation d'un rattrapage d'usure.

9. Arrangement d'embrayage selon l'une des revendications 1 à 3, **caractérisé en ce qu'**au moins l'un des arrangements de levier de transmission (61, 63) est soutenu par rapport à l'arrangement de boîtier (12) par le biais d'un dispositif de rattrapage de l'usure (66, 78).
